Europäisches Patentamt

European Patent Office

Office européen des brevets

(11) Publication number: **0 090 574**
**A1**

# EUROPEAN PATENT APPLICATION

(21) Application number: 83301575.3

(22) Date of filing: 22.03.83

(51) Int. Cl.³: **C 02 F 5/10**

(30) Priority: 25.03.82 US 362010

(43) Date of publication of application: 05.10.83
Bulletin 83/40

(84) Designated Contracting States: **BE CH DE FR GB IT LI LU NL SE**

(71) Applicant: **PFIZER INC., 235 East 42nd Street, New York, N.Y. 10017 (US)**

(72) Inventor: **Walinski, Stanley Walter, 361 Fishtown Road, Mystic Connecticut (US)**

(74) Representative: **Moore, James William, Pfizer Limited Ramsgate Road, Sandwich Kent CT13 9NJ (GB)**

(54) Polyitaconic acid threshold scale inhibitor.

(57) A method of threshold scale inhibition which comprises adding to water containing scale-forming impurities, such as seawater for desalination, an effective amount, preferably from about 0.5 to 10 parts per million, of polyitaconic acid having a weight average molecular weight of from about 500 to 2000.

PC 6499

## POLYITACONIC ACID THRESHOLD SCALE INHIBITOR

This invention relates to the use of polyitaconic acid as a threshold scale inhibitor.

Aqueous systems containing dissolved mineral salts are commonly employed in operations such as heating, cooling and evaporative distillation which involve heat transfer. The salts often become insoluble during the operation and are deposited as scale on the heat transfer surfaces, resulting in reduced heat transfer and eventual failure of the equipment. In general, the mineral scale salts are derived from alkaline earth and other metal cations such as calcium, magnesium, iron and lead, and from anions such as bicarbonate, carbonate, hydroxide, sulfate and phosphate. Many factors influence scale formation and include, for example, the pH of the water, the nature of the dissolved salts and the temperature of the operation.

Numerous additives have been proposed as inhibitors of mineral scaling. Of special importance are those additives known as threshold scale control agents which exhibit scale inhibition at extremely low additive concentrations of even one part per million or less. Included among the threshold scale control agents are acrylic and methacrylic acid homopolymers and copolymers with such as maleic anhydride and fumaric acid. While these additives have proven to be effective at threshold concentrations, the need still exists for alternative effective threshold scale control agents which can be simply and inexpensively prepared. It is therefore a primary objective of the present invention to provide such an alternative threshold scale inhibitor.

Polyitaconic acid of various molecular weights has found many uses. U.S. Patent 3,055,873, for example, discloses such uses as a detergent aid in laundering and a deflocculating agent for papermaking. U.S. Patent 3,308,067 also suggests its use as a detergent builder, while U.S. Patent 3,405,060 discloses its use as a sequesterant for metal ions and United Kingdom Published Application GB2054548A indicates its suitability for boiler scale removal. Polyitaconic acid as a threshold scale inhibitor, however, has not been disclosed or suggested.

It has now been found that low molecular weight polyitaconic acid is especially effective as a threshold scale control agent.

Accordingly, the present invention entails a method for the prevention of scale formation in water containing scale-forming impurities, such as in seawater for desalination, which comprises mixing with the water an effective amount of a threshold scale control agent comprising polyitaconic acid having a weight average molecular weight of from about 500 to 2000 or an alkali metal, ammonium or amine salt thereof, preferably at a concentration of from about 0.5 to 10 parts per million.

The polyitaconic acid preferably has a weight average molecular weight of from about 500 to 1000. The method may also comprise addition to the seawater of an amount of such as sulfuric acid to neutralize preferably from about 55 to 85 percent of the bicarbonate alkalinity of the seawater.

The present method of threshold scale inhibition entails the use of polyitaconic acid of controlled low molecular weight, the weight average molecular weight of the polymer being from about 500 to 2000, preferably from about 500 to 1000. While not wishing to be bound to a given theory, it is believed that polymer in this low molecular weight range is more effective as a threshold scale inhibitor, particularly during the desalination of seawater, because of the propensity of polyitaconic acid of higher molecular weight to precipitate from the seawater as a sodium complex and thereby reduce the effective dosage.

Such polyitaconic acid may be prepared, for example, by solution polymerization in a ketonic solvent such as methyl isobutyl ketone at a moderate reaction temperature of from about 90 to 150°C, the reflux temperature of the solvent generally being employed. The polymerization is conducted in the presence of a relatively high concentration (0.10 to 0.20 mole/mole monomer) of free-radical initiator soluble in the solvent and having a half life of from about 5 to 10 hours at the temperature of the polymerization; such initiators include di-t-butyl peroxide, dicumyl peroxide, di-t-butyl diperoxyphthalate and t-butyl peroxymaleic acid. Such a polymerization normally requires a relatively short reaction period of from about 0.5 to 8 hours to obtain relatively good yields of the desired polymer.

The product polymer having a weight average molecular weight of from about 500 to 2000 may be isolated from the final polymerization solution by standard isolation techniques. However, since the polymer will generally be employed in aqueous systems, the solvent in the final polymerization solution will normally be stripped from the solution and replaced by water, such as by azeotropic distillation, and the resulting aqueous solution, as such, diluted or concentrated as desired, used without isolation of the polymer. This solution may also be neutralized to form an aqueous solution of the alkali metal, ammonium or amine salt of the polymer. Alkali metal bases suitable for the neutralization include sodium hydroxide, potassium hydroxide and lithium hydroxide, while suitable ammonium and amine bases include ammonia, ammonium hydroxide, mono-, di- and trialkyl amines having 1 to 5 carbon atoms in each alkyl group, pyridine, morpholine and lutidine.

The itaconic acid homopolymer of the present invention, while being of general applicability as a threshold scale inhibitor, is especially useful in the prevention of alkaline calcium and magnesium scale formation in such processes as the evaporative desalination of seawater. The polymer is added to the water being treated in an effective amount, normally at a level from about 0.1 to 100 parts per million and preferably from about 0.5 to 10 parts per million, to inhibit scale formation. In such addition, an aqueous solution at about 1 to 60 weight percent polymer or salt equivalent thereof may be metered directly into the stream being treated, but preferably is diluted with water to a concentration of about 0.1 to 1 weight percent before being added.

Other additives commonly used in combination with threshold scale inhibitors are also effective with the novel inhibitor of the present invention.

Especially useful are mineral acids, especially sulfuric acid, whereby part of the bicarbonate alkalinity present in such as seawater to be desalinated is neutralized; the extent of the bicarbonate neutralization is normally from about 30 to 85 percent, especially from about 55 to 85 percent. Foam control agents, corrosion inhibitors and oxygen scavengers, for example, may also be utilized with these novel scale inhibitors.

The following example is merely illustrative and is not to be construed as limiting the invention, the scope of which is defined by the appended claims.

Preparation of Low Molecular Weight Polyitaconic Acid

To a 3-neck 500 ml round bottom flask equipped with an overhead stirrer, reflux condenser, thermometer and nitrogen inlet was added 150 g methyl isobutyl ketone, 130.1 g (1.0 mole) itaconic acid and 14.6 g (0.1 mole) di-t-butyl peroxide. The flask was purged with nitrogen and then heated under the nitrogen atmosphere to reflux temperature (117°C).

Following a reflux period of 40 minutes, 150 ml water was added to the reaction solution and the methyl isobutyl ketone solvent was removed by azeotropic distillation. Cooling of the resulting aqueous solution to 25°C resulted in the crystallization of unreacted itaconic acid. Filtration of the slurry resulted in the recovery of 81.3 g of unreacted itaconic acid solids and 235.8 g of an amber filtrate having a solids content of 20.1 weight percent, corresponding to a 36.5 percent yield of polyitaconic acid based on the charged monomer. Size exclusion high pressure liquid chromotagraphy analysis of the homopolymer indicated a weight average molecular weight of 800.

## Evaluation as Threshold Scale Inhibitor

The polyitaconic acid ($M_w$ 800) of the above preparation was tested together with a polyitaconic acid of weight average molecular weight 7000 (prepared by solution polymerization in water at 92°C with sodium persulfate initiator) in a laboratory single-stage flash evaporator using a synthetic seawater to determine their scale control performances. The operation of the laboratory evaporator and the method of testing were as described by Auerbach and Carruthers in Desalination, 31, 279 (1979). The synthetic seawater was the "Standard Synthetic Seawater Composition" of the Office of Saline Water containing an augmented bicarbonate content of 0.25 g/kg to increase the scaling potential. The polymer concentration in the testing was 3 parts per million on an active solids basis.

Results of the testing are summarized below. The percent deposited scale is calculated from the equation:

$$\% \text{ deposited scale} = \frac{200 \times \text{millimoles deposited scale}}{\text{millimoles bicarbonate in brine}} \, .$$

Polymers which provide a lower "% deposited scale" at a given dosage afford superior performance.

| Antiscalant (3 ppm active dosage) | % deposited scale ($CaCO_3$ & $Mg(OH)_2$) |
|---|---|
| Polyitaconic acid, $M_w$ = 800 | 12.8 |
| Polyitaconic acid, $M_w$ = 7000 | 19.7 |
| Control (no additive) | 36.0 |

CLAIMS

1.  A method for the prevention of scale formation in water containing scale-forming impurities, which comprises mixing with said water an effective amount of a threshold scale control agent comprising polyitaconic acid having a weight average molecular weight of from about 500 to 2000 or an alkali metal, ammonium or amine salt thereof.

2.  The method of claim 1 wherein said weight average molecular weight is from about 500 to 1000.

3.  The method of claim 1 wherein said agent is polyitaconic acid.

4.  The method of claim 1 wherein said agent is mixed with said water at a concentration of from about 0.5 to 10 parts per million.

5.  The method of claim 4 wherein said water is seawater for desalination.

6.  The method of claim 5 which further comprises addition of sufficient sulfuric acid to said seawater to neutralize from about 55 to 85 percent of the bicarbonate alkalinity thereof.

**European Patent Office**

**EUROPEAN SEARCH REPORT**

| | DOCUMENTS CONSIDERED TO BE RELEVANT | | EP 83301575.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | <u>DE - A1 - 3 022 924</u> (KURITA)<br>* Claims 1,6,7,8,12,19 *<br>-- | 1,3-5 | C 02 F 5/10 |
| X | <u>DE - A1 - 2 643 422</u> (KURITA)<br>* Claims 1,2,4; page 10, lines 1-13; page 19, lines 6-12, 27-29 *<br>-- | 1-5 | |
| A | <u>GB - A - 1 414 918</u> (CIBA-GEIGY)<br>* Claims 1,6,11,12,15,16; page 14, line 9 - page 15, line 3 *<br>---- | 1-5 | |

| | TECHNICAL FIELDS SEARCHED (Int. Cl. ³) |
|---|---|
| | C 02 F |

The present search report has been drawn up for all claims

| Place of search | Date of completion of the search | Examiner |
|---|---|---|
| VIENNA | 19-05-1983 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82